# EUROPEAN PATENT SPECIFICATION

(11) **EP 3 102 382 B1**
(45) Date of publication and mention of the grant of the patent: **12.05.2021**
(21) Application number: 15702263.3
(22) Date of filing: 02.02.2015
(51) Int. Cl.: B29C 49/06, B29C 49/12, B29C 49/18, B29C 49/48, B29C 49/54, B29C 49/64

(54) **SYSTEM AND PROCESS FOR DOUBLE-BLOW MOLDING A HEAT RESISTANT AND BIAXIALLY STRETCHED PLASTIC CONTAINER**
SYSTEM UND VERFAHREN ZUM DOPPELTEN BLASFORMEN EINES WÄRMEBESTÄNDIGEN UND BIAXIAL GEDEHNTEN KUNSTSTOFFBEHÄLTERS
SYSTÈME ET PROCÉDÉ POUR MOULAGE À DOUBLE SOUFFLAGE D'UN RÉCIPIENT EN PLASTIQUE ÉTIRÉ BIAXIALEMENT ET RÉSISTANT À LA CHALEUR

(30) Priority: 07.02.2014 EP 14154289
(43) Date of publication of application: 14.12.2016
(73) Proprietor: Plastipak BAWT S.à.r.l., 4940 Bascharage (LU)
(72) Inventor: VAN DIJCK, Sam, B-2320 Hoogstraten (BE); DESSAINT, Alain, B-1910 Kampenhout (BE); DECKERS, Jan, B-2960 Brecht (BE)
(74) Representative: Matkowska, Franck
(86) International application number: PCT/EP2015/052083
(87) International publication number: WO 2015/117922

(56) References cited:
- EP-A1- 2 633 977
- WO-A1-87/04661
- FR-A1- 2 975 332
- JP-A- S57 131 526

## Description

### Technical field

The present invention relates to the technical field of double-blow molding a heat resistant and biaxially stretched plastic container, and in particular a heat resistant and biaxially stretched PET container. The invention more particularly relates to a double-blow molding technique, including the use of a novel primary blow mold design, for manufacturing a heat resistant and biaxially stretched plastic container, and more particularly a heat resistant and biaxially stretched plastic container having a base that is movable to absorb vacuum pressures inside the container, without unwanted deformation of other portions of the container. The heat resistant container can be used for example in hot fill applications, or can be sterilized, notably by carrying out a pasteurization process or a retort process.

### Prior art

Plastic containers and in particular PET (Polyethylene Terephtalate) containers are now widely used for storing various commodities, and in particular food products, liquids, etc... In particular, manufacturers and fillers, as well as consumers, have recognized that PET containers are lightweight, not expensive, can be manufactured in large quantities and can be recycled.

Biaxially stretched plastic containers, and in particular PET containers, manufactured by conventional ISBM techniques (Injection Stretch Blow Molding) using cold blowing molds, i.e. blowing molds at ambient temperature or less, are not heat resistant, and can be easily deformed by the heat. For example biaxially stretched containers are easily deformed at high temperature above the Tg (temperature of glass transition) of their plastic material, i.e. above 70°C for PET.

There are however many applications wherein heat resistant plastic containers are needed, like for example hot fill applications, or containers submitted to sterilization process, and in particular to a pasteurization process or a retort process. Related prior art is disclosed in the documents FR2975332A1, WO87/04661A1, JPS57131526A and EP2633977A1.

In a hot filling process, the plastic container is filled with a commodity such as for example a liquid, while the commodity is at an elevated temperature. For example for liquids, such as juices, the temperature is typically between 68°C and 96°C, and is usually around 85°C. When packaged in this manner, the high temperature of the commodity also sterilizes the container at the time of filling. The bottling industry refers to this process as hot filling, and containers designed to withstand the process are commonly referred as hot-fill containers.

In a hot filling process, after being hot-filled, the container is capped and allowed to reside at generally the filling temperature for a few minutes and is then actively cooled prior to transferring to labeling, packaging, and shipping operations.

When the product in the container is liquid or semi-liquid, this cooling reduces the volume of the product inside the container. This product shrinkage phenomenon results in the creation of a vacuum within the container. If not controlled or otherwise accommodated, these vacuum pressures can result in unwanted deformations of the container, which leads to either an aesthetically unacceptable container or one that is unstable.

Typically, container manufacturers accommodate vacuum pressures by incorporating deformable structures.

Plastic hot-fill containers incorporating such deformable structures are for example described in the following publications: U.S. Patents 5,005,716 ; 5,503,283 ; 6,595,380 ; 6,896,147 ; 6,942,116 ; and 7,017,763, and PCT application WO 2001/014759. In these publications, a deformable structure to at least partially compensating the volume reduction that occurs after capping and during cooling of a hot-filled product, is located in the base of the container. More particularly, in PCT application WO 2011/014759, the movable container base includes a central push-up portion and is designed to move up to accommodate internal vacuum pressures.

Plastic hot-fill containers are also described for example in the following publications: European patent application EP 1 947 016 and U.S. Patents 5,222,615 ; 5,762,221 ; 6,044,996 ; 6,662,961 ; 6,830,158. In these publications, a deformable portion, to at least partially compensating the volume reduction that occurs after capping and during cooling of a hot-filled product, is located in the shoulder part of the container.

Plastic hot-fill containers are also described for example in the following publications : U.S. Patents 5,092,475 ; 5,141,121 ; 5,178,289 ; 5,303,834 ; 5,704,504 ; 6,585,125 ; 6,698,606 ; 5,392,937 ; 5,407,086 ; 5,598,941 ; 5,971,184 ; 6,554,146 ; 6,796,450. In these publications, the deformable portions, to at least partially compensating the volume reduction that occurs after capping and during cooling of a hot-filled product, are located in the sidewall of the main body of the container, and are commonly referred as vacuum panels. In this case, the volume compensation can be advantageously increased.

The hot filling process is acceptable for commodities having a high acid content, but is not generally acceptable for non-high acid content commodities. For non-high acid commodities, pasteurization and retort are generally the preferred sterilization processes.

Pasteurization and retort are both processes for cooking or sterilizing the contents of a container after filling. Both processes include the heating of the contents of the container to a specified temperature, usually above approximately 70°C for a specified length of time (for example 20 - 60 minutes). Retort differs from pasteurization in that retort uses higher temperatures to sterilize the container and cook its contents. Retort also generally applies elevated air pressure externally to the container to counteract pressure inside the container.

Containers manufacturers have developed different thermal processes for imparting heat resistance to biaxially stretched plastic containers, and in particular to biaxially stretched PET containers.

A first method commonly referred as "heat setting", includes blow molding a plastic preform, and for example a PET preform, against a mold heated to a temperature higher than Tg, and more particularly higher than the target heat resistance temperature value, to obtain a biaxially stretched container of higher crystallinity, and holding the biaxially stretched container against the heated mold for a certain length of time to remove residual strain produced by the biaxial stretching. For example, for a PET container, the blow mold temperature is approximately between 120°C and 130°C, and the heat set holding time of the container is typically a few seconds

Conventional heat set PET containers have typically a heat resistant up to a maximum of approximately 100°C, and cannot be used for containing a content which is heat treated at temperatures much higher than 100 °C.

Another thermal process to impart heat resistance to a biaxially stretched plastic container is commonly referred in the industry as the "double-blow process" or "double-blow heat set" process. When molding a plastic container with this process, an injection molded preform is conveyed through a preheating oven to produce a desired temperature profile within the preform. When at the proper temperature, the preform exits the oven and is transferred to a primary heated blow mold, wherein the preform is blown to form a primary biaxially stretched container. The volume of this primary biaxially stretched container is typically larger than the volume of the final container, and is for example sized to be 15%-25% larger than the final container volume.

In a first variant, the primary biaxially stretched container is transferred to a heat treating oven. In this oven, the applied heat causes the primary biaxially stretched container to undergo a significant degree of shrinkage, which significantly releases orientation stresses in the container, and will allow the container to be re-blown.

In a second variant, this shrinking step is performed inside the primary blow mold by holding the primary biaxially stretched container inside the heated primary blow mold for a sufficient length of time to obtain the required shrinkage.

For both variants, after this shrinking step performed by heat treatment, a secondary shrunk container of smaller volume is obtained. The volume of this secondary shrunk container is slightly smaller than the volume of the final container.

The secondary shrunk container is transferred inside a secondary heated blow mold and is re-blown inside said secondary heated blow mold, in order to form a final biaxially stretched and heat resistant plastic container. This biaxially stretched and heat resistant plastic container is then removed from the secondary heated blow mold.

The biaxially stretched containers issued from a double-blow process are generally heat resistant to higher temperatures than the aforesaid conventional single blow heat setting process.

One drawback of the aforesaid known double-blow process is that with the conventional designs of known primary blow molds, the shrinking of the primary biaxially stretched container leads to a shrinking of the container base that typically reduces too much the transverse size of the base, which in turn leads to a significant stretching of the base of the shrunk secondary container during the second blow molding step. This stretching of the base during the second blowing blow molding step induces significant residual stresses in the final container base, which therefore can still provoke a detrimental residual shrinking of the base of the final container when hot filled.

More particularly, when the container has a movable base to accommodate internal vacuum pressures, like for example the deformable container base described in aforesaid PCT application WO 2011/014759, this residual shrinking of the base of the final container when hot filled detrimentally deforms said movable base, in such a way that said base is moved up to an extent that deteriorates the mobility of the base and can render this base not operative and useless for accommodating internal vacuum pressures.

### Objective of the invention

A main objective of the invention is to improve the so-called double-blow process for making a heat resistant and biaxially stretched plastic container.

A more particular objective of the invention is to solve the aforesaid drawback of residual shrinking of the base of a heat resistant and biaxially stretched plastic container that is manufactured by carrying out a double-blow process.

A more particular objective of the invention is to solve the aforesaid drawback of residual shrinking of the base of a heat resistant and biaxially stretched plastic container, that is manufactured by carrying out a double-blow process, and that includes a deformable base to accommodate internal vacuum pressures.

### Summary of the invention

To achieve all or part of these objectives, the invention firstly relates to a system for double-blow molding heat resistant containers as defined in claim 1

Pursuant to the invention, the novel profile of the bottom molding portion of the mold cavity of the primary blow mold of said system significantly improves the deformation, induced by shrinking, of the base of a primary biaxially stretched plastic container blow molded in said primary blow mold. More particularly thanks to this novel profile of the bottom molding portion of the mold cavity, the deformation, induced by shrinking, of the base of a primary biaxially stretched plastic container blow molded in said primary blow mold leads to the formation of an improved shrunk base, whose dimension and geometry can be very close to the dimension and geometry of the mold cavity of a secondary blow mold of the double-blow process, and can thus significantly reduces the stretching of this shrunk base inside the secondary mold. The base of the final container is thus less subjected to a shrinking phenomenon when hot filled and is more stable.

Another object of the invention is a method for double-blow molding a heat resistant container, as defined in claim 12.

### Brief description of the drawings

The technical characteristics and advantages of the invention will appear more clearly on reading the following detailed description of several embodiments of the invention, which detailed description is made by way of non-exhaustive and non-limiting examples, and with reference to the appended drawings, as follows:
- Figure 1 shows an example of a biaxially stretch blow molded and heat resistant container obtained by double-blow molding the preform of figure 2.
- Figure 2 is a longitudinal cross section view of a wide-mouth preform.
- Figure 3 is a longitudinal cross section view of a first variant of a primary blow mold of the invention.
- Figure 4 is a longitudinal cross section view of the preform of figure 2 positioned in the primary blow mold of figure 3.
- Figure 5 shows an example of primary container that has been obtained by biaxially stretch blow molding the preform of figure 2 in the primary blow mold of figure 3.
- Figure 6 shows an example of secondary shrunk container that is obtained after shrinkage of the primary biaxially stretch blow molded container of figure 5.
- Figures 7 to 9 are longitudinal cross section views of a secondary blow mold showing the successive molding steps.
- Figure 10 is a longitudinal cross section view shows of the final container of figure 1 showing the mobility of the movable base thereof.
- Figure 11 is a longitudinal cross section view of a second variant of a primary blow mold of the invention.
- Figure 12 shows an example of secondary shrunk container that is obtained after shrinkage of a primary container, which primary container has been obtained by biaxially stretch blow molding the preform of figure 2 in the primary blow mold of figure 11.
- Figure 13 is a longitudinal cross section view of a third variant of a primary blow mold of the invention.
- Figure 14 shows an example of secondary shrunk container that is obtained after shrinkage of a primary container, which primary container has been obtained by biaxially stretch blow molding the preform of figure 2 in the primary blow mold of figure 13.

### Detailed description

Some preferred embodiments of the invention are discussed in detail below. While specific exemplary embodiments are discussed, it should be understood that this is done for illustration purpose only. A person skilled in the art will recognize that other container designs or container dimensions can be used without parting from the spirit and scope of the invention.

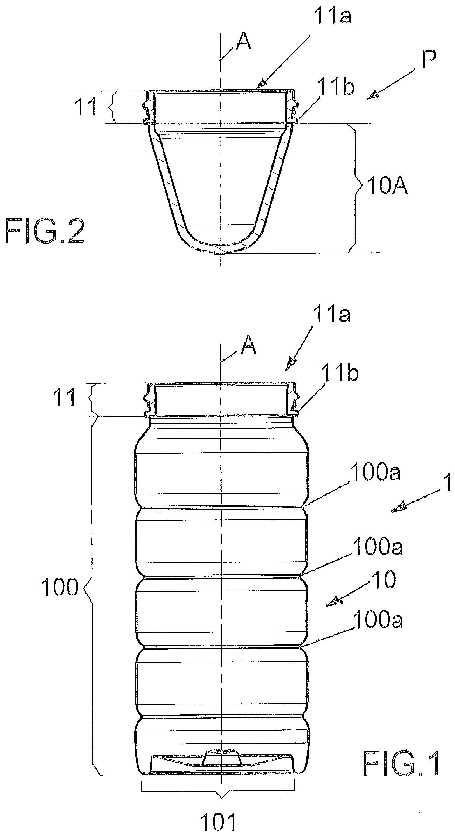

Referring now to the drawings, figure 1 illustrates an example of a wide-mouth heat resistant biaxially stretched plastic container 1, which has been obtained by double-blow molding the wide-mouth preform P of figure 2.

The preform P of figure 2 can be manufactured by the well-known technique of injection molding.

The container 1 of figure 1 has a biaxially stretched blow-molded hollow body 10 defining a central vertical axis A, and a cylindrical neck finish 11 comprising a top pouring opening 11a and a neck support ring 11b. The biaxially stretched blow-molded hollow body 10 comprises a vertical sidewall 100 extended by a transverse bottom wall 101 forming the base of the container.

The sidewall 100 comprises annular reinforcing ribs 100a.

The bottom wall 101 is designed to be movable inwardly to absorb vacuum pressures inside the container 1 when hot filled.

Within the scope of the invention, the plastic container 1 and preform P can be made of any thermoplastic material that can be processed by using injection stretched blow molded techniques. Preferred thermoplastic materials useful for the invention are polyesters, and in particular polyethylene terephtalate (PET), homo or copolymers thereof, and blend thereof. Other materials suitable for use in the present invention are polypropylene (PP), polyethylene (PE), polystyrene (PS), polyvinyl chloride (PVC) and polylactic acid (PLA), polyethylene-furanoate (PEF), homo or copolymers thereof, and blend thereof.

Although the preform P and container 1 shown in the appended drawings are monolayer, the invention is however not limited to monolayer preforms and monolayer containers, but encompasses also multilayer preforms and multilayer containers.

Within the scope of the invention, the biaxially stretched blow-molded hollow body 10 of the container 1 can have any shape and any size. The hollow body 10 can be cylindrical, or can have other shape in transverse cross section (i.e. in a plan perpendicular to central vertical axis A), including notably oval shape and any polygonal shape, including notably square shape, rectangular shape, hexagonal shape, octagonal shape. The hollow body 10 of the container does not necessarily comprise ribs 100a.

The invention is also not limited to the manufacture of heat resistant plastic containers having a wide-mouth, but encompasses also the manufacture of a heat resistant plastic container having a smaller mouth.

In the particular example of figure 1, the central axis A of the container body 10 is also the central axis of the cylindrical neck finish 11. In other variants within the scope of the invention, the central axis of the cylindrical neck finish 11 is not necessarily the same than the vertical central axis A of the stretched blow-molded hollow body 10, but can be offset from said vertical central axis A. The central axis of the cylindrical neck finish 11 is also not necessarily parallel to the vertical central axis A of the stretched blow-molded hollow body 10, and the neck finish is not necessarily cylindrical.

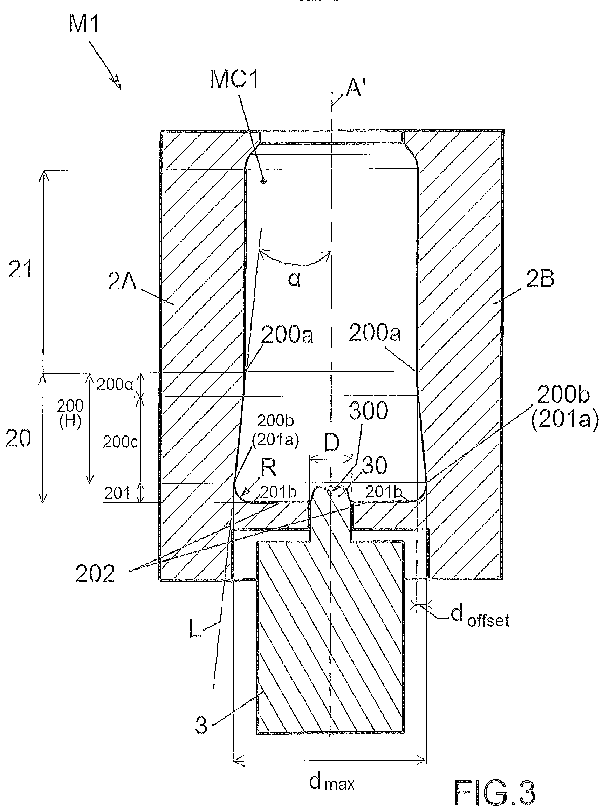

Referring now to figure 3, the primary blow mold M1 used as first blow mold in the double-blow molding process comprises a mold cavity MC1 having a vertical central axis A', and defined by the inner molding surfaces of a pair of mold halves 2A and 2B and by a protruding centering portion 30 of a base mold 3.

Mold halves 2A and 2B are knowingly provided with heating means (not shown), for example electric heating means, in order to heat up their inner molding surfaces to a set up and controlled temperature. The base mold 30 is also knowingly provided with heating means (not shown), for example heating means using a heating fluid like oil, in order to heat up the protruding centering portion 30 to a set up and controlled temperature that can be different than or equal to the temperature of the mold halves 2A, 2B.

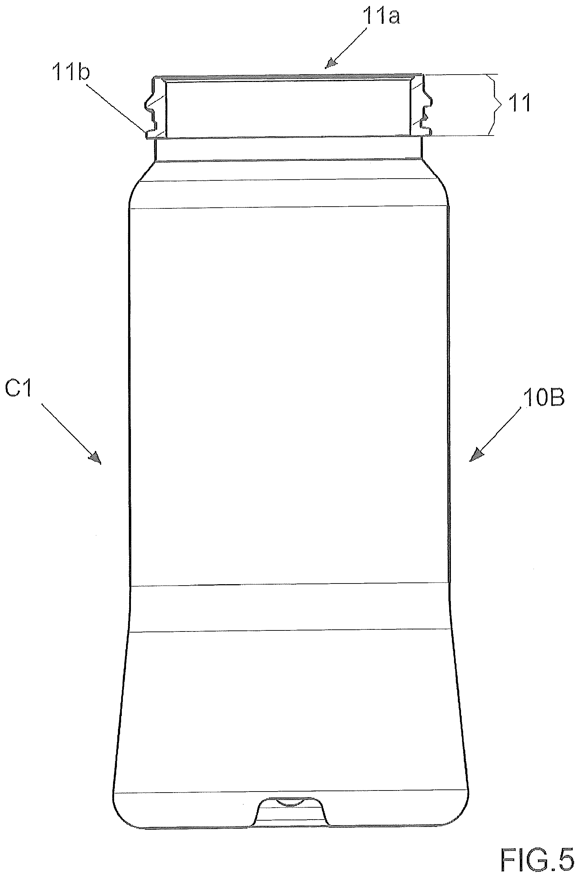

The mold cavity MC1 of the primary blow mold M1 comprises an upper cylindrical molding portion 21 and a bottom molding portion 20, that is used for molding the bottom portion of a primary biaxially stretched container C1 shown on figure 5, including the base of said container C1.

Said bottom molding portion 20 of the mold cavity is formed of a non cylindrical sidewall 200, a concave transition wall 201 of radius R where the transverse cross section of the mold cavity MC1, measured in a plan perpendicular to the central axis A', is the largest, and a bottom wall 202 transverse to the central axis A'. This bottom wall is formed by a bottom part of each mold half 2A, 2B.

The non cylindrical sidewall 200 is an extension of the cylindrical upper molding portion 21 and is forming a lateral molding surface centered on central axis A'.

The value of the radius R of the concave transition wall 201 is not limiting the invention. Preferably however, but not necessarily, this concave radius R can be at least 4mm, and more particularly at least 7mm.

In the particular example of figure 3, the bottom wall 202 is a flat wall perpendicular to the axis A', but within the scope of the invention bottom wall 202 could have any other profile, and is not necessarily flat.

The sidewall 200 is transitioning on its whole periphery to the bottom wall 202 along said concave transition wall 201 of radius R.

The transverse cross section of the non-cylindrical sidewall 200, measured in a plan perpendicular to the central axis A', is the largest at the transition point 200b/201a with the concave transition wall 201.

More particularly the non-cylindrical sidewall 200 does not comprise any cylindrical portion.

More particularly, in this example, the transverse cross section of the sidewall 200, in a plan perpendicular to central axis A', is increasing continuously from its upper end 200a towards its lower end 200b at the transition with said concave transition wall 201.

More particularly, in the particular example of figure 3, the non cylindrical sidewall is constituted by a lower main portion 200c and a small upper transitional portion 200d that is slightly convex. The lower main portion 200c is transitioning to the cylindrical upper molding portion 21 along said upper convex transitional portion 200d.

The profile in longitudinal cross section of the lower main portion 200c of the sidewall 200, in a plan parallel to the central axis A', is substantially flat.

In this example, the lower main portion 200c of the sidewall 200 can form a molding surface of revolution centered on the central axis A', and in particular a frustroconical molding surface having its apex oriented upwardly. The lower main portion 200c of the sidewall 200 can also form a pyramidal molding surface of any polygonal transverse cross section, including notably square shape, rectangular shape, hexagonal shape and octagonal shape.

More particularly, the non-cylindrical sidewall 200 is smoothly transitioning to the concave transition wall 201 without any convex radius at the transition between the sidewall portion 200 and the concave transition wall 201.

In the particular example of figure 3, but not necessarily, the concave transition wall 201 is smoothly transitioning to the bottom wall 202 without any convex radius at the transition between the concave transition wall 201 and the bottom wall 202.

In reference to figure 3, the offset distance d_{offset} is the distance measured, in a plan perpendicular to the central axis A', between:
- the upper end 200a of the non-cylindrical sidewall 200 at the transition with the upper cylindrical molding portion 21,
   and
- an outermost point of the concave transition wall 201 where the transverse cross section (dmax) of the bottom molding portion 20, measured in a plan perpendicular to the central axis A', is the largest.

Pursuant to the invention, the offset distance d_{offset}, is at least 2mm, preferably at least 3mm and more preferably at least 4mm.

The offset distance d_{offset} depends notably on the volume of the final container 1. The larger the final container is, the larger the offset distance d_{offset} offset will be. By way of examples only :
- for a 370 ml container 1, the offset distance d_{offset} offset can be 2 mm ;
- for a 720 ml container 1, the offset distance d_{offset} can be 4 mm.

The slope angle of the non-cylindrical sidewall 200 is defined as the angle α measured, in a longitudinal cross section plan parallel to the central axis A', between the central axis A' and a straight line L including the upper end 200a and the lower end 200b of the non-cylindrical sidewall 200.

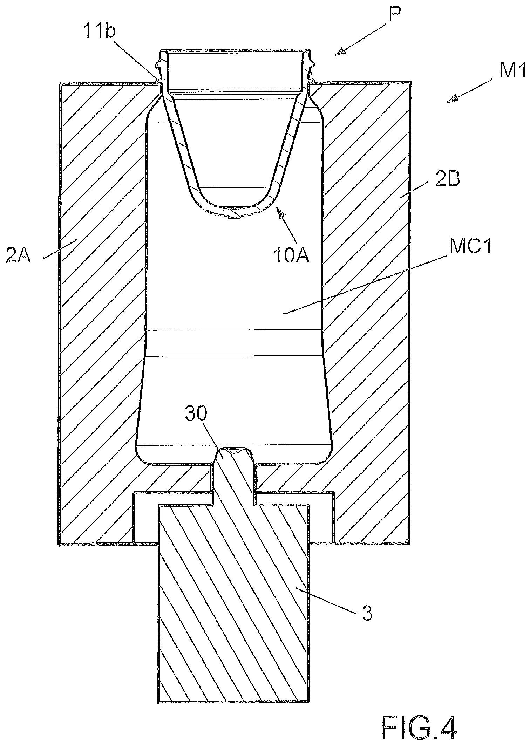

In the particular example of figures 3 and 4, the angle α is also substantially equal to the conical angle of the lower main portion 200c of the sidewall 200.

Pursuant to the invention, this slope angle α is not less than 3°, and preferably not less than 5°.

The slope angle α is depending on the volume of final container 1. By way of examples only:
- for a 370 ml container 1, the slope angle α can be 18°;
- for a 720 ml container 1, the slope angle α can be 5°.

The height H of the non-cylindrical sidewall 200 is depending notably on the volume of final container 1, and is in most cases at least 10mm, and more preferably at least 25mm.

The protruding centering portion 30 of the mold base 30 protrudes through the bottom wall 202 inside the mold cavity MC1 and forms a dome inside the mold cavity MC1. The apex 300 of this dome shape protruding centering portion 30 is the top part thereof.

The maximum diameter D of this protruding centering portion 30 is preferably not more than 27mm, preferably not more than 25mm, and even more preferably not more than 20mm.

More particularly, the protruding centering portion 30 protrudes inside the mold cavity MC1 through said bottom wall 202, in such way that the protruding centering portion 30 and the bottom parts of said mold halves 2A, 2B form a bottom molding surface of the mold cavity MC1 for molding the base of a primary container.

The heat resistant biaxially stretched plastic container 1 of figure 1 can be manufactured by double-blow molding the preform P of figure 2 as follows.

The preform P is conveyed through a preheating oven to knowingly produce a desired temperature profile within the preform. For a PET preform P, the pre-heating of the preform P can be for example between 90°C and 120°C.

When at the proper temperature, the preform P is transferred to the primary blow mold M1 whose mold cavity MC1 is being heated above the Tg of the preform.

By way of example only, for a PET preform P, the two mold halves 2A, 2B of the primary blow mold M1 can be heated up to a temperature of at least about 140°C, and preferably around 180°C ; the base mold 3 of the primary blow mold M1 can be heated up to a temperature around 120°C-130°C to avoid sticking problem when removing the container from the mold cavity.

In reference to figure 4, the preform P is positioned in the blow mold M1 in such a way that it is supported and retained in the blow mold M1 by its neck support ring 11b and that the body 10A (below the neck support ring 11b) of the preform P is inside the mold cavity MC1.

Once positioned in the heated primary blow mold M1, the body 10A of the preform P is knowingly biaxially stretch blow-molded (in axial direction and in a radial direction) inside the cavity mold MC1 in order to form a primary biaxially stretched container C1 shown on figure 5, and having a body 10B of higher volume and shaped by the inner heated molding surface of the mold cavity MC1. The neck finish 11 is used for maintaining the preform in the blow mold M, and is thus not stretched. This biaxially stretch blow-molding can be knowingly achieved by means of a stretch rod and air introduced under pressure inside the preform P.

As the heating temperature (120°C -130°C) of the base mold 3 is lower than the heating temperature (around 180°C) of the pair of mold halves 2A, 2B, the portion of the container base molded by the protruding centering portion 30 of the base mold 3 has a lower crystallinity than the remaining portion of the container base molded by the bottom parts of the pair of mold halves 2A, 2B forming the bottom wall 202 of the mold cavity MC1. By using a protruding centering portion 30 having a small transverse dimension (D) of not more than 27mm, the portion of the base having the lowest crystallinity is advantageously reduced, which reduces the stretching of the base of the final container 1, and improves the resistance to shrinkage of the base of the final container 1 when hot filled

Once the primary biaxially stretched container C1 is formed, it is subsequently submitted to a shrinking step.

This shrinking step is performed inside the primary blow mold M1, by releasing the air pressure inside the container C1, and by holding the primary biaxially stretched container C1 inside the heated primary blow mold M1, for a sufficient length of time (for example not more than 1s) to obtain the required shrinkage.

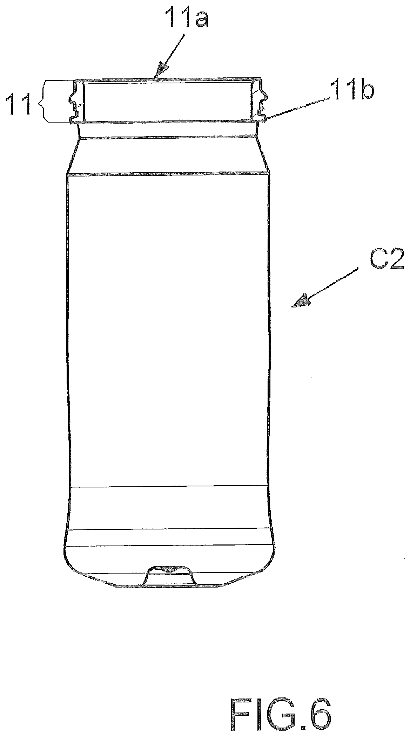

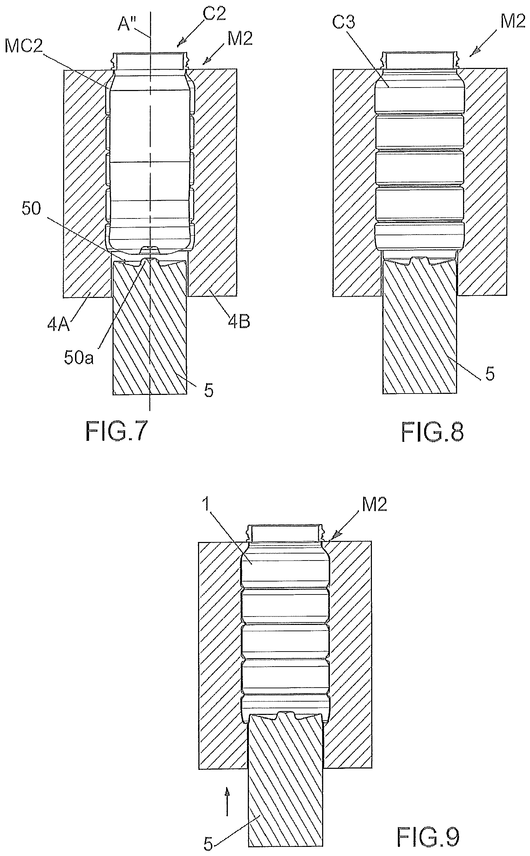

A secondary shrunk container C2 of slightly smaller volume (shown on figure 6) is thus obtained. The shrinkage releases orientation stresses in the container C2. Then the shrunk container C2 is transferred, without being reheated to secondary blow mold M2 (figure 7) for being re-blown.

In another variant, the shrinking step can be performed outside the primary blow mold M1. In such a case the primary biaxially stretched container C1 is transferred to a heat treating oven. In this oven, the applied heat causes the primary biaxially stretched container C1 to undergo a significant degree of shrinkage, and form the secondary shrunk container C2.

The volume of this secondary shrunk container is slightly smaller than the volume of the final container, and the secondary shrunk container C2 is knowingly re-blown in the secondary blow mold M2, in order to form the heat resistant biaxially stretched container 1 of slightly larger volume that is shown on figure 1.

Referring to figure 7, the secondary blow mold M2, used as second blow mold in the double-blow molding process, comprises mold a cavity MC2 having a vertical central axis A", and defined by the inner molding surfaces of a pair of mold halves 4A and 4B and by the top face 50 of a base mold 5, including a protruding centering portion 50a similar to the protruding centering portion 30 of first blow mold M1.

Mold halves 4A and 4B are knowingly provided with heating means (not shown), for example for example heating means using a heating fluid like oil, in order to heat up their inner molding surfaces to a set up and controlled temperature. The base mold 5 is also knowingly provided with heating means (not shown), for example heating means using a heating fluid like oil, in order to heat up the top face 50 of a base mold 5, including the protruding centering portion 50a, to a set up and controlled temperature that can be different than or equal to the temperature of the mold halves 4A, 4B.

By way of example only, for a PET container, the two mold halves 4A, 4B of the secondary blow mold M2 can be heated up to a temperature of at least about 140°C, and are preferably heated up to a temperature around 140°C ; the base mold 5 of the secondary blow mold M2 can be heated up to a temperature around 120°C- 130°C.

In the particular example of Figures 7 to 9, the base mold 50 is movable axially between a lower position shown on figure 7 and an upper position shown on figure 9.

During the second blow molding step inside the secondary blow mold M2, in first sub-step, the secondary shrunk container C2 is first re-blown inside the mold cavity MC2, with the base mold 50 in the lower position, in order to mold the intermediate container C3 of figure 8. Then, in second sub-step, the base mold 50 is actuated to move from the lower position of figure 8 to the upper position of figure 9, in order to box inwardly the base of the intermediate container C3, and form the base 101 of the final container 1.

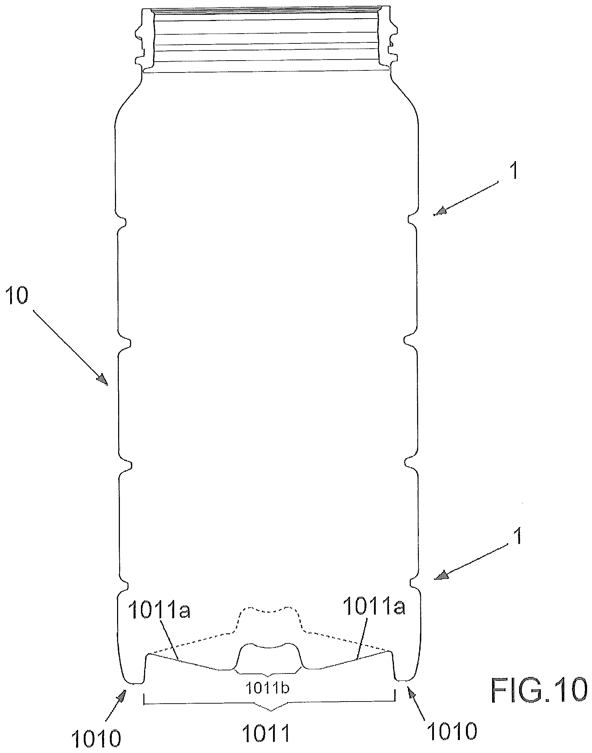

In reference to figure 10, the base 101 of the final container is deformable inwardly (phantom lines) to absorb the vacuum pressure inside the container, when hot filled, without causing unwanted deformation in the other portions of the container 1.

More particularly, this base 101 comprises a heel portion 1010 forming a contact ring for stably supporting the container 1 in upright position on a flat surface. The base 101 also comprises a central movable wall portion 1011 surrounded by the heel portion and comprising a movable wall 1011a and a central push-up portion 1011b.

In this variant, the movable wall 1011a forms substantially a frustroconical wall.

When the container 1 is removed from the secondary mold M2, the apex of said substantially frustroconical wall 1011a is oriented towards the outside of the container 1 (see figure 10/ straight line).

Once the container is hot filled with a hot liquid or the like, then is capped and cooled down, the vacuum pressure generated inside the container 1 make the movable wall portion 1011 move up towards the inside of the container, in order to automatically reduce the container volume and accommodate such vacuum pressure, without unwanted deformation of the container body 10. In this particular embodiment, the frustroconical wall 1011a is inverted under the vacuum pressures, the apex (figure 10/ phantom line) of the deformed frustroconical wall 1011a being oriented towards the inside of the container 1.

The biaxially stretched container 1 issued from said double-blow process is heat resistant and can be hot filled without unwanted deformation or can be sterilized in pasteurization process or in retort process, without significant shrinking of the container 1.

It has to be outlined that thanks to the novel profile of the bottom molding portion 20 of the primary mold cavity MC1, the deformation, induced by shrinking, of the base of aforesaid primary biaxially stretched plastic container C1, leads to the formation of an improved shrunk base (container C2), whose dimension and geometry can be close to the dimension and geometry of the mold cavity MC2 of a secondary blow mold M2 of the double-blow process, and can thus significantly reduces the stretching of this shrunk base inside the secondary mold M2. The base 101 of the final container 1 is thus less subjected to a shrinking phenomenon when hot filled and is more stable, and in the best case does not shrink at all.

More particularly, in case of a container 1 having a movable base to accommodate vacuum pressure when hot filled, if said base 101 was shrinking too much, such a significant shrinkage would already move up the movable wall 1011a and central push-up portion 1011b in the final container (before being hot filled), thereby dramatically, and in the worst case loosing, the capability of said movable base to absorb vacuum. With the invention, the low shrinkage of the base 101 of the container 1 allows to maintain a movable wall 1011 substantially in its position of figure 10 (straight lines) with the apex of substantially frustroconical wall 1011a being oriented towards the outside of the container 1. The capability of the movable base 101 to accommodate vacuum pressure inside the container 1 when hot filled is thus fully preserved.

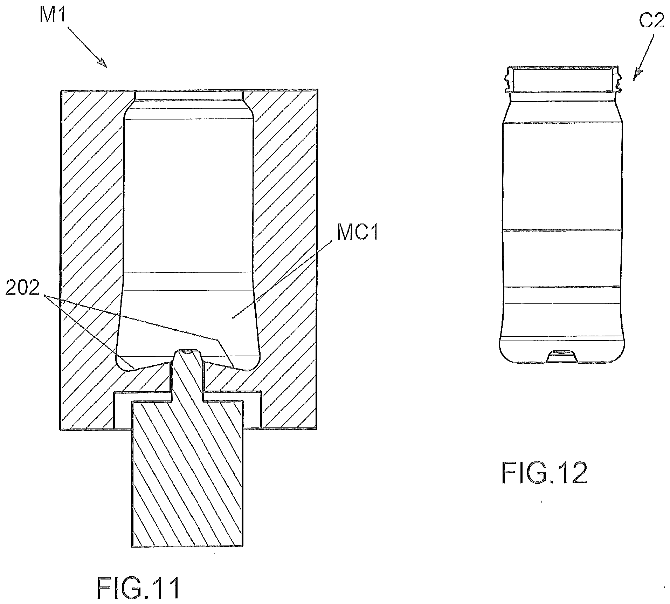

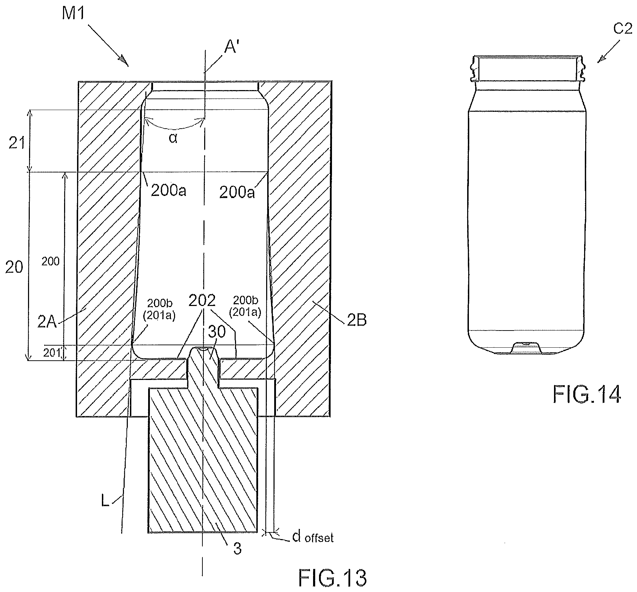

Figure 11 shows another example of primary mold M1, wherein the bottom wall 202 is not flat, but is frustroconical with its apex oriented upwardly towards the inside of the mold cavity MC1. Figure 13 shows the secondary shrunk container C2 that is obtained from a primary container that has been biaxially stretch blow molded in the mold cavity MC1 of figure 12, after shrinkage of said primary container. The shrinkage of the base of primary container forms a substantially flat base in the secondary shrunk container C2.

Figure 13 shows another example of primary mold M1, wherein the sidewall 200 is not flat in longitudinal cross section but is slightly convex. Figure 15 shows the secondary shrunk container C2 that is obtained from a primary container that has been biaxially stretch blow molded in the mold cavity MC1 of figure 13, after shrinkage of said primary container.

## Claims

1. A system for double-blow molding heat resistant containers (1), said system comprising a primary blow mold (M1) for blow molding a primary biaxially stretched container (C1) from a plastic preform (P), and a secondary blow mold (M2) for blow molding a final biaxially stretched container (1) from the primary biaxially stretched container (C1) after shrinkage thereof, wherein said primary blow mold (M1) comprises a mold cavity (MC1), wherein said mold cavity (MC1) comprises a cylindrical upper molding portion (21) and a bottom molding portion (20), wherein said bottom molding portion (20) of the mold cavity (MC1) comprises a sidewall (200), that is an extension of the cylindrical upper molding portion (21), that forms a molding surface centered on a central axis (A'), and that is not cylindrical or does not comprise a cylindrical portion, a concave transition wall (201) where the transverse cross section of the mold cavity (MC1), measured in a plan perpendicular to the central axis (A'), is the largest, and a bottom wall (202) transverse to the central axis (A'), wherein the non-cylindrical sidewall (200) of the bottom molding portion (20) is transitioning on its whole periphery to the bottom wall (202) along said concave transition wall (201), wherein the transverse cross section of the non-cylindrical sidewall (200), measured in a plan perpendicular to the central axis (A'), is the largest at the transition with the concave transition wall (201), wherein the bottom molding portion (20) defines an offset distance (d_{offset}) of at least 2mm, said offset distance (d_{offset}) being measured, in a plan perpendicular to the central axis (A'), between, on the one hand, the upper end (200a) of the non-cylindrical sidewall (200) at the transition with the upper cylindrical molding portion (21) and, on the other hand, an outermost point of the concave transition wall (201) where the transverse cross section (dmax) of the bottom molding portion (20), measured in a plan perpendicular to the central axis (A'), is the largest, and wherein the slope angle (a) of the non-cylindrical sidewall (200) is not less than 3°, and preferably not less than 5°, said slope angle (a) being measured, in a longitudinal cross section plan parallel to the central axis (A'), between the central axis (A') and a straight line (L) including the upper end (200a) and the lower end (200b) of the non-cylindrical sidewall (200).

2. The system of claim 1, wherein the non-cylindrical sidewall (200) does not comprise any cylindrical portion.

3. The system of any one of the previous claims, wherein the transverse cross section of the non-cylindrical sidewall (200) is increasing continuously from its upper end (200a) towards its lower end (200b) at the transition with said concave transition wall (201).

4. The system of any one of the previous claims, wherein the non-cylindrical sidewall (200) is pyramidal or frustroconical with its apex oriented upwardly or comprises at least a lower portion (200c) which is pyramidal or frustroconical with its apex oriented upwardly.

5. The system of any one of the previous claims, wherein the said outermost point (200b/201a) is at the transition between the non-cylindrical sidewall (200) and the concave transition wall (201).

6. The system of any one of the previous claims, wherein the non-cylindrical sidewall (200) is transitioning to the concave transition wall (201) without any convex radius.

7. The system of any one of the previous claims, comprising a base mold (3) having a protruding centering portion (30) that protrudes through the bottom wall (202) inside the mold cavity (MC1).

8. The system of any one of the previous claims, wherein the bottom wall (202) is a flat wall perpendicular to the central axis (A'), or is frustroconical with its apex oriented towards the inside of the mold cavity (MC1).

9. The system of claim 1, wherein the mold cavity (MC1) of said primary blow mold (M1) is defined by a pair of mold halves (2A, 2B) and a base mold (3), wherein a bottom wall (202) of the mold cavity (MC1) is formed by a bottom part of each mold half (2A, 2B), wherein the base mold (3) comprises a protruding centering portion (30) that protrudes inside the mold cavity (MC1) through said bottom wall (202), wherein the protruding centering portion (30) protrudes inside the mold cavity (MC1) through said bottom wall (202), in such way that the protruding centering portion (30) and the bottom parts of said mold halves (2A, 2B) form a bottom molding surface of the mold cavity (MC1) for molding the base of a primary container, and wherein the maximum transverse dimension (D) of said protruding centering portion (30) is not more than 27 mm.

10. The system of claim 9 comprising first heating means for heating the pair of mold halves (2A, 2B), and more particularly electrical heating means, and second heating means for heating the base mold (3), and more particularly oil heating means.

11. The system of claim 10, wherein the second heating means are adapted to heat the base mold (3) to a temperature lower than the heating temperature of the pair of mold halves (2A, 2B).

12. A method for double-blow molding a heat resistant container (1), comprising the steps of :
- providing a plastic preform (P) in the mold cavity (MC1) of a primary blow mold (M1) of the system defined in any one of claims 1 to 11;
- biaxially stretch blow molding the preform (P) inside the mold cavity (MC1) to form a primary biaxially stretched container (C1);
- heating the primary biaxially stretched container inside or outside the primary blow mold (M1) to make the primary biaxially stretched container (C1) shrink and to obtain a secondary shrunk container (C2),
- providing said secondary shrunk container (C2) in the secondary blow mold (M2) of a system defined in any one of claims 1 to 11,
- blow molding the secondary shrunk container (C2) inside the secondary blow mold (M2) to form a final biaxially stretched and heat resistant container (1).

13. The method of claim 12 wherein the secondary blow mold (M2) is adapted to mold, in the final container (1), a base (11) that is movable upwardly inside the container (1) to absorb vacuum pressure inside the container.

14. The method of any one of claims 12 to13 wherein the mold cavity (MC1) of the primary blow mold (M1) and the mold cavity (MC2) of the secondary blow mold (M2) are heated to temperatures above the Tg of the plastic material of the preform.

15. The method of any one of claims 12 to 14, wherein the system is the one defined in any one of claims 9 to 11, and wherein the base mold (3) of said primary mold is heated to a temperature lower than the heating temperature of the pair of mold halves (2A, 2B).

## Patentansprüche

1. System zum Doppelblasformen von hitzebeständigen Behältern (1), wobei das System eine primäre Blasform (M1) zum Blasformen eines primären biaxial gestreckten Behälters (C1) aus einem Kunststoffvorformling (P) und eine sekundäre Blasform (M2) zum Blasformen eines endgültigen biaxial gestreckten Behälters (1) aus dem primären biaxial gestreckten Behälter (C1) nach dessen Schrumpfung enthält, wobei die primäre Blasform (M1) einen Formhohlraum (MC1) aufweist, wobei der Formhohlraum (MC1) einen zylindrischen oberen Formungsabschnitt (21) und einen Bodenformungsabschnitt (20) enthält, wobei der Bodenformungsabschnitt (20) des Formhohlraums (MC1) eine Seitenwand (200), die eine Verlängerung des zylindrischen oberen Formungsabschnitts (21) ist, eine auf einer Mittelachse (A') zentrierte Formungsfläche bildet und nichtzylindrisch ist oder keinen zylindrischen Abschnitt aufweist, eine konkave Übergangswand (201), wo der in einer Ebene senkrecht zur Mittelachse (A') gemessene Querschnitt des Formhohlraums (MC1) am größten ist, und eine Bodenwand (202) quer zur Mittelachse (A') aufweist, wobei die nicht zylindrische Seitenwand (200) des Bodenformungsteils (20) an ihrem gesamten Umfang entlang der konkaven Übergangswand (201) in die Bodenwand (202) übergeht, wobei der in einer Ebene senkrecht zur Mittelachse (A') gemessene Querschnitt der nicht-zylindrischen Seitenwand (200) an dem Übergang zu der konkaven Übergangswand (201) am größten ist, wobei der Bodenformungsabschnitt (20) einen Versatzabstand (d_{offset}) von mindestens 2 mm definiert, wobei der Versatzabstand (d_{offset}) in einer Ebene senkrecht zur Mittelachse (A') zwischen dem oberen Ende (200a) der nicht-zylindrischen Seitenwand (200) am Übergang zum oberen zylindrischen Formabschnitt (21) einerseits und einem äußersten Punkt der konkaven Übergangswand (201) andererseits, wo der in einer Ebene senkrecht zur Mittelachse (A') gemessene Querschnitt (dₘₐₓ) des Bodenformabschnitts (20) am größten ist, gemessen wird, und wobei der Neigungswinkel (a) der nicht-zylindrischen Seitenwand (200) nicht weniger als 3° und vorzugsweise nicht weniger als 5° beträgt, wobei der Neigungswinkel (a) in einer Längsschnittebene parallel zur Mittelachse (A') zwischen der Mittelachse (A') und einer geraden Linie (L) gemessen wird, die das obere Ende (200a) und das untere Ende (200b) der nicht-zylindrischen Seitenwand (200) einschließt.

2. System nach Anspruch 1, wobei die nicht-zylindrische Seitenwand (200) keinen zylindrischen Abschnitt aufweist.

3. System nach einem der vorhergehenden Ansprüche, wobei der Querschnitt der nicht-zylindrischen Seitenwand (200) von ihrem oberen Ende (200a) zu ihrem unteren Ende (200b) am Übergang zu der konkaven Übergangswand (201) kontinuierlich zunimmt.

4. System nach einem der vorhergehenden Ansprüche, wobei die nicht zylindrische Seitenwand (200) pyramiden- oder kegelstumpfförmig ist und ihr Scheitelpunkt nach oben gerichtet ist oder mindestens einen unteren Abschnitt (200c) aufweist, der pyramiden- oder kegelstumpfförmig ist und sein Scheitelpunkt nach oben gerichtet ist.

5. System nach einem der vorhergehenden Ansprüche, wobei der äußerste Punkt (200b/201 a) am Übergang zwischen der nicht-zylindrischen Seitenwand (200) und der konkaven Übergangswand (201) liegt.

6. System nach einem der vorhergehenden Ansprüche, wobei die nicht zylindrische Seitenwand (200) ohne konvexen Radius in die konkave Übergangswand (201) übergeht.

7. System nach einem der vorhergehenden Ansprüche, umfassend eine Basisform (3) mit einem vorstehenden Zentrierabschnitt (30), der durch die Bodenwand (202) innerhalb des Formhohlraums (MC1) vorsteht.

8. System nach einem der vorhergehenden Ansprüche, wobei die Bodenwand (202) eine flache Wand senkrecht zur Mittelachse (A') ist oder kegelstumpfförmig ist und ihr Scheitelpunkt zum Inneren des Formhohlraums (MC1) hin ausgerichtet ist.

9. System nach Anspruch 1, wobei der Formhohlraum (MC1) der primären Blasform (M1) durch ein Formhälftenpaar (2A, 2B) und eine Basisform (3) definiert ist, wobei eine Bodenwand (202) des Formhohlraums (MC1) durch einen Bodenteil jeder Formhälfte (2A, 2B) gebildet wird, wobei die Basisform (3) einen vorstehenden Zentrierabschnitt (30) aufweist, der (202) innerhalb des Formhohlraums (MC1) durch die Bodenwand vorsteht, wobei der vorstehende Zentrierabschnitt (30) innerhalb des Formhohlraums (MC1) durch die Bodenwand (202) derart vorsteht, dass der vorstehende Zentrierabschnitt (30) und die Bodenteile der Formhälften (2A, 2B) eine Bodenformfläche des Formhohlraums (MC1) zum Formen des Bodens eines primären Behälters bilden, und wobei die maximale Querabmessung (D) des vorstehenden Zentrierabschnitts (30) nicht mehr als 27 mm beträgt.

10. System nach Anspruch 9, das eine erste Heizeinrichtung zum Erwärmen des Formhälftenpaar (2A, 2B), insbesondere elektrische Heizmittel, und zweite Heizmittel zum Beheizen der Basisform (3), insbesondere Ölheizmittel, aufweist.

11. System nach Anspruch 10, wobei die zweiten Heizmittel angepasst sind, um die Basisform (3) auf eine Temperatur zu erwärmen, die niedriger als die Heiztemperatur des Formhälftenpaares (2A, 2B) ist.

12. Verfahren zum Doppelblasformen eines hitzebeständigen Behälters (1), das die folgenden Schritte umfasst:
- Bereitstellen eines Kunststoffvorformlings (P) in der Formkavität (MC1) einer Primärblasform (M1) des Systems nach einem der Ansprüche 1 bis 11,
- biaxiales Streckblasformen des Vorformlings (P) im Inneren des Formhohlraums (MC1), um einen primären biaxial gestreckten Behälter (C1) zu bilden;
- Erhitzen des primären biaxial gestreckten Behälters innerhalb oder außerhalb der primären Blasform (M1), um den primären biaxial gestreckten Behälter (C1) zu schrumpfen und einen sekundären geschrumpften Behälter (C2) zu erhalten,
- Bereitstellen des sekundären geschrumpften Behälters (C2) in der sekundären Blasform (M2) eines Systems nach einem der Ansprüche 1 bis 11,
- Blasformen des sekundär geschrumpften Behälters (C2) innerhalb der sekundären Blasform (M2), um einen endgültigen biaxial gestreckten und hitzebeständigen Behälter (1) zu bilden.

13. Verfahren nach Anspruch 12, bei dem die sekundäre Blasform (M2) geeignet ist, in dem endgültigen Behälter (1) einen Boden (11) zu formen, der innerhalb des Behälters (1) nach oben bewegbar ist, um innerhalb des Behälters den Vakuumdruck aufzunehmen.

14. Verfahren nach einem der Ansprüche 12 bis 13, wobei der Formhohlraum (MC1) der primären Blasform (M1) und der Formhohlraum (MC2) der sekundären Blasform (M2) auf Temperaturen oberhalb der Tg des Kunststoffmaterials des Vorformlings erwärmt werden.

15. Verfahren nach einem der Ansprüche 12 bis 14, wobei das System das in einem der Ansprüche 9 bis 11 definierte ist und wobei die Basisform (3) der Primärform auf eine Temperatur erwärmt wird, die niedriger als die Heiztemperatur des Formhälftenpaares (2A, 2B) ist.

## Revendications

1. Système de moulage par double soufflage de récipients résistant à la chaleur (1), ledit système comprenant un moule de soufflage primaire (M1) pour mouler par soufflage récipient étiré biaxialement primaire (C1) à partir d'une préforme de plastique (P), et un moule de soufflage secondaire (M2) pour mouler par soufflage un récipient étiré biaxialement final (1) à partir du récipient étiré biaxialement primaire (C1) après la rétractation de celui-ci, dans lequel ledit moule de soufflage primaire (M1) comprend une cavité de moule (MC1), dans lequel ladite cavité de moule (MC1) comprend une partie de moulage supérieure cylindrique (21) et une partie de moulage inférieure (20), dans lequel ladite partie de moulage inférieure (20) de la cavité de moule (MC1) comprend une paroi latérale (200), qui est une extension de la partie de moulage supérieure cylindrique (21), qui forme une surface de moulage centrée sur un axe central (A'), et qui n'est pas cylindrique ou ne comprend pas de partie cylindrique, une paroi de transition concave (201) où la section transversale de la cavité de moule (MC1), mesurée dans un plan perpendiculaire à l'axe central (A'), est la plus grande, et une paroi inférieure (202) transversale à l'axe central (A'), dans lequel la paroi latérale non cylindrique (200) de la partie de moulage inférieure (20) effectue une transition sur la totalité de sa périphérie jusqu'à la paroi inférieure (202) le long de ladite paroi de transition concave (201), dans lequel la section transversale de la paroi latérale non cylindrique (200), mesurée dans un plan perpendiculaire à l'axe central (A'), est la plus grande au niveau de la transition avec la paroi de transition concave (201), dans lequel la partie de moulage inférieure (20) définit une distance de décalage (d_{décalage}) d'au moins 2 mm, ladite distance de décalage (d_{décalage}) étant mesurée, dans un plan perpendiculaire à l'axe central (A'), entre, d'une part, l'extrémité supérieure (200a) de la paroi latérale non cylindrique (200) au niveau de la transition avec la partie de moulage supérieure cylindrique (21) et, d'autre part, un point le plus extérieur de la paroi de transition concave (201) où la section transversale (dₘₐₓ) de la partie de moulage inférieure (20), mesurée dans un plan perpendiculaire à l'axe central (A'), est la plus grande, et dans lequel l'angle d'inclinaison (a) de la paroi latérale non cylindrique (200) n'est pas inférieur à 3°, et de préférence pas inférieur à 5°, ledit angle d'inclinaison (a) étant mesuré, dans un plan de section transversale longitudinale parallèle à l'axe central (A'), entre l'axe central (A') et une ligne droite (L) qui inclut l'extrémité supérieure (200a) ainsi que l'extrémité inférieure (200b) de la paroi latérale non cylindrique (200).

2. Système selon la revendication 1, dans lequel la paroi latérale non cylindrique (200) ne comprend aucune partie cylindrique.

3. Système selon l'une quelconque des revendications précédentes, dans lequel la section transversale de la paroi latérale non cylindrique (200) augmente de façon continue à partir de son extrémité supérieure (200a) en direction de son extrémité inférieure (200b) au niveau de la transition avec ladite paroi de transition concave (201).

4. Système selon l'une quelconque des revendications précédentes, dans lequel la paroi latérale non cylindrique (200) est pyramidale ou tronconique avec son sommet orienté vers le haut ou comprend au moins une partie inférieure (200c) qui est pyramidale ou tronconique avec son sommet orienté vers le haut.

5. Système selon l'une quelconque des revendications précédentes, dans lequel ledit point le plus extérieur (200b/201a) se situe au niveau de la transition entre la paroi latérale non cylindrique (200) et la paroi de transition concave (201).

6. Système selon l'une quelconque des revendications précédentes, dans lequel la paroi latérale non cylindrique (200) effectue une transition jusqu'à la paroi de transition concave (201) sans aucun rayon convexe.

7. Système selon l'une quelconque des revendications précédentes, comprenant un moule de base (3) qui présente une partie de centrage saillante (30) qui fait saillie à travers la paroi inférieure (202) à l'intérieur de la cavité de moule (MC1).

8. Système selon l'une quelconque des revendications précédentes, dans lequel la paroi inférieure (202) est une paroi plate qui est perpendiculaire à l'axe central (A'), ou est tronconique avec son sommet orienté en direction de l'intérieur de la cavité de moule (MC1).

9. Système selon la revendication 1, dans lequel la cavité de moule (MC1) dudit moule de soufflage primaire (M1) est définie par une paire de demi-moules (2A, 2B) et un moule de base (3), dans lequel une paroi inférieure (202) de la cavité de moule (MC1) est formée par une partie inférieure de chaque demi-moule (2A, 2B), dans lequel le moule de base (3) comprend une partie de centrage saillante (30) qui fait saillie à l'intérieur de la cavité de moule (MC1) à travers ladite paroi inférieure (202), dans lequel la partie de centrage saillante (30) fait saillie à l'intérieur de la cavité de moule (MC1) à travers ladite paroi inférieure (202) d'une manière telle que la partie de centrage saillante (30) ainsi que les parties inférieures desdits demi-moules (2A, 2B) forment une surface de moulage inférieure de la cavité de moule (MC1) pour mouler la base d'un récipient primaire, et dans lequel la dimension transversale maximum (D) de ladite partie de centrage saillante (30) n'est pas supérieure à 27 mm.

10. Système selon la revendication 9, comprenant des premiers moyens de chauffage pour chauffer la paire de demi-moules (2A, 2B), et plus particulièrement des moyens de chauffage électriques, ainsi que des seconds moyens de chauffage pour chauffer le moule de base (3), et plus particulièrement des moyens de chauffage à huile.

11. Système selon la revendication 10, dans lequel les seconds moyens de chauffage sont adaptés pour chauffer le moule de base (3) à une température qui est inférieure à la température de chauffage de la paire de demi-moules (2A, 2B).

12. Procédé de moulage par double soufflage d'un récipient résistant à la chaleur (1), comprenant les étapes suivantes :
- disposer une préforme de plastique (P) dans la cavité de moule (MC1) d'un moule de soufflage primaire (M1) selon le système de l'une quelconque des revendications 1 à 11 ;
- mouler par soufflage avec étirage biaxial la préforme (P) à l'intérieur de la cavité de moule (MC1) de manière à former un récipient étiré biaxialement primaire (C1) ;
- chauffer le récipient étiré biaxialement primaire à l'intérieur ou à l'extérieur du moule de soufflage primaire (M1) dans le but de rétracter le récipient étiré biaxialement primaire (C1) et d'obtenir un récipient secondaire rétracté (C2) ;
- installer ledit récipient secondaire rétracté (C2) dans le moule de soufflage secondaire (M2) d'un système selon l'une quelconque des revendications 1 à 11 ; et
- mouler par soufflage le récipient secondaire rétracté (C2) à l'intérieur du moule de soufflage secondaire (M2) de manière à former un récipient final étiré biaxialement et résistant à la chaleur (1).

13. Procédé selon la revendication 12, dans lequel le moule de soufflage secondaire (M2) est adapté pour mouler, dans le récipient final (1), une base (11) qui est déplaçable vers le haut à l'intérieur du récipient (1) dans le but d'absorber une pression de vide à l'intérieur du récipient.

14. Procédé selon l'une quelconque des revendications 12 à 13, dans lequel la cavité de moule (MC1) du moule de soufflage primaire (M1) et la cavité de moule (MC2) du moule de soufflage secondaire (M2) sont chauffées à des températures qui sont supérieures à la Tg de la matière plastique de la préforme.

15. Procédé selon l'une quelconque des revendications 12 à 14, dans lequel le système est le système selon l'une quelconque des revendications 9 à 11, et dans lequel le moule de base (3) dudit moule primaire est chauffé à une température qui est inférieure à la température de chauffage de la paire de demi-moules (2A, 2B).
